# FASCICULE DE BREVET EUROPEEN

(11) **EP 2 276 622 B1**
(45) Date de publication et mention de la délivrance du brevet: **21.12.2016**
(21) Numéro de dépôt: 09731380.3
(22) Date de dépôt: 04.04.2009
(51) Int. Cl.: B29C 65/02, B29C 53/42, B65B 51/26, B29C 65/14, B29C 65/74, B29C 65/36

(54) **PROCÉDÉ DE FABRICATION DE TUBES PAR SOUDAGE**
VERFAHREN ZUR HERSTELLUNG VON RÖHREN MITTELS SCHWEISSEN
METHOD FOR MANUFACTURING TUBES BY WELDING

(30) Priorité: 10.04.2008 WO PCT/IB2008/051362
(43) Date de publication de la demande: 26.01.2011
(73) Titulaire: Aisapack Holding SA, 1896 Vouvry (CH)
(72) Inventeur: THOMASSET, Jacques, CH-1896 Vouvry (CH)
(74) Mandataire: Grosfillier, Philippe
(86) Numéro de dépôt international: PCT/IB2009/051428
(87) Numéro de publication internationale: WO 2009/125330

(56) Documents cités:
- WO-A-2004/039561
- CH-A5- 695 937
- DE-U1- 8 103 868
- GB-A- 1 553 177

## Description

### Domaine de l'invention

L'invention concerne la fabrication d'emballages flexibles par soudage de films plastiques. Plus spécifiquement, l'invention se rapporte à la confection de tubes souples destinés à stocker et distribuer des produits liquides ou pâteux.

### Etat de la technique

On connaît des tubes flexibles constitués d'une tête et d'une jupe souple obtenue par soudage d'une bande dite « laminé », le laminé étant formé de plusieurs couches plastiques ou métalliques. Les jupes sont obtenues par déroulement d'une bande ; par mise en forme de la bande en corps tubulaire ; par soudage des extrémités de la bande formant généralement un léger recouvrement ; et enfin par découpe du corps tubulaire en segments de longueur identique. Une tête de tube est ensuite soudée ou moulée sur l'extrémité de ladite jupe. La tête de tube comporte un goulot avec orifice et une épaule reliant le goulot à ladite jupe. Le tube est ainsi livré au conditionneur, tête en bas et avec l'orifice de distribution obturé (par un bouchon vissé par exemple), afin d'être rempli par l'extrémité restée ouverte du tube. Une fois le tube rempli, l'extrémité est fermée par pincement et soudage du film sur lui-même.

Une difficulté rencontrée lors de la confection des tubes flexible par soudage réside dans la déformation de la jupe lors de l'opération de soudage. Souvent, les jupes produites ne présentent pas une géométrie parfaitement circulaire comme il le serait souhaité, mais présente une section en forme de « poire » ou de « goutte d'eau ». Ces défauts de circularité sont particulièrement préjudiciables aux opérations d'assemblage et de remplissage des tubes. L'assemblage de la jupe et de la tête par soudage nécessite l'introduction de la tête à l'intérieur de la jupe ; opération d'autant plus délicate que le défaut de circularité est important. Lors du remplissage, le conditionneur doit introduire une buse par l'extrémité restée ouverte du tube. Cette opération est fortement perturbée lorsque la section du tube n'est pas circulaire.

La circularité des jupes a une influence sur la géométrie finale du tube et dans de nombreux cas les défauts de circularité nuisent aux propriétés esthétiques de l'emballage. Pour cette raison, il est souhaité d'avoir des jupes parfaitement circulaires.

La demande de brevet WO2004039561 propose de déformer le laminé au-delà du domaine élastique préalablement à l'opération de soudage. Un premier procédé proposé dans la demande WO2004039561 consiste à amincir d'environ 1% la bande par calandrage. Un effort compris entre 2,5 et 500 Newton par millimètre de largeur de la bande doit être appliqué. Lorsque la bande comporte plus de 70% de plastique en volume, il est suggéré de chauffer ladite bande avant calandrage à une température comprise entre 75 et 120°C. Un deuxième procédé proposé dans la demande WO2004039561 consiste à réaliser un embossage se traduisant par la création de reliefs et de creux dont l'amplitude est comprise de préférence entre 1/15 et 3 fois l'épaisseur de la bande. Cette opération de calandrage ou embossage aurait pour effet de modifier les contraintes résiduelles dans le laminé. Selon les inventeurs ce procédé uniformise le comportement élastique de la bande et dans le cas d'un embossage permet d'augmenter la rigidité de la bande dans le sens long et dans le sens travers. Cependant, le procédé proposé dans la demande de brevet WO2004039561 présente plusieurs inconvénients. Elle est difficilement utilisable avec des bandes imprimées et surtout lorsque l'impression est en surface. En effet l'opération de calandrage ou d'embossage tend à détériorer l'impression du fait des déformations des températures et frottements engendrés par le procédé.

Un autre procédé pour améliorer la circularité des tubes est proposé dans le brevet Suisse CH695937A5. Ce procédé consiste à effectuer un traitement thermique sur le corps tubulaire avant qu'il soit coupé en segments de longueur identique. Le corps tubulaire est confectionné selon l'état de l'art, le procédé de soudage comprenant notamment une étape de conformation dans laquelle la bande est enroulée autour d'une tige de soudage pour former un corps cylindrique ; une étape de chauffage pour faire fondre les extrémités de la bande à souder ; une étape de mise en pression des extrémités à souder ; et une étape de refroidissement de la zone soudée. Le brevet CH695937A5 propose de faire un traitement thermique du corps tubulaire postérieurement au procédé de soudage. Le traitement thermique consiste à homogénéiser la température du corps tubulaire par l'intermédiaire d'un fluide en contact avec la surface extérieure du tube. Le dispositif servant à effectuer le traitement thermique est inséré entre le dispositif de soudage et le dispositif de coupe. Un inconvénient du procédé proposé dans le brevet CH695937A5 est lié à l'encombrement nécessaire pour effectuer un traitement thermique efficace. Cet encombrement est d'autant plus grand que l'épaisseur du laminé est importante ; si bien que le procédé proposé s'avère inadapté pour les laminés épais et les grandes vitesses de production.

Un autre procédé de fabrication de corps tubulaires flexibles en matière plastique est proposé dans le brevet GB1553177

### . Exposé de l'invention

L'invention consiste en un procédé de soudage permettant de réaliser par soudage d'un laminé des jupes tubulaires. Les jupes sont obtenues par déroulement d'une bande ; par mise en forme de la bande en corps tubulaire ; par soudage des extrémités de la bande, ces dernières étant mises en contact bout-à-bout ou par recouvrement ; et enfin par découpe du corps tubulaire en segments de longueur identique appelés « jupes ».

Le procédé de soudage selon l'invention consiste - préalablement ou conjointement ou postérieurement - à l'opération de soudage, à chauffer la bande, de préférence à une température supérieure à 60°C, en dehors de la zone soudée.

Dans l'exposé de l'invention, l'expression « zone soudée » représente la partie de la bande qui est chauffée, comprimée et refroidie dans le procédé de soudage. La zone soudée ne se limite pas à la partie de la bande mise en contact ; elle constitue la partie de la bande affectée thermiquement par l'opération de soudage.

Par "bande", on entend une feuille, formée de plusieurs couches plastiques ou métalliques.

Selon un mode de réalisation de l'invention l'opération de chauffage de la bande est réalisée avant la mise en forme de la bande autour de la tige de soudage.

Selon l'invention la bande est chauffée à une température constante dans la direction de défilement de la bande qui est aussi parallèle à l'axe du tube ; et avec un profil de température dans la direction perpendiculaire à la direction de défilement de la bande qui est aussi la direction circonférentielle du tube.

Selon un deuxième mode de réalisation, l'opération de chauffage de la bande est réalisée conjointement et non pas séquentiellement au soudage des extrémités de la bande.

Un troisième mode de réalisation consiste à chauffer la bande postérieurement à l'opération de soudage, et p.ex. postérieurement à la découpe du corps tubulaire en sections de longueur identique et conjointement à l'opération de soudage de la tête du tube sur le corps tubulaire.

### Exposé détaillé de l'invention

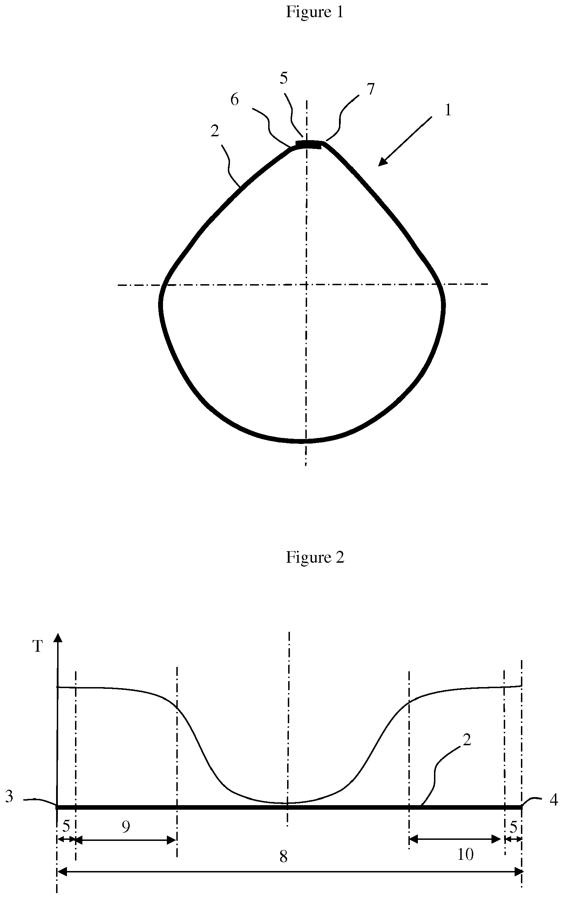

La figure 1 illustre la section d'un corps tubulaire présentant des défauts de circularité auxquels l'invention permet de remédier. Les défauts de la section résultent de la confection du corps tubulaire par soudage selon les procédés connus dans l'état de l'art et sans opérations préalables ou successive au procédé de soudage telles que décrites dans les antériorités WO2004039561 et CH695937A5. Le corps tubulaire 1 résulte du soudage d'une bande 2 dont les extrémités soudées 3 et 4 forment généralement un recouvrement au niveau de la zone soudée 5. Une autre méthode de soudage consiste à assembler bout à bout les extrémités 3 et 4 de la bande. Dans les deux cas, il est observé des défauts de circularité 6 et 7 situés à proximité de la zone soudée 5 et affectant globalement la rondeur du corps tubulaire.

Le procédé de soudage selon l'invention consiste, conjointement à l'opération de soudage, à chauffer la bande, de préférence à une température supérieure à 60 °C, également en dehors de la zone soudée.

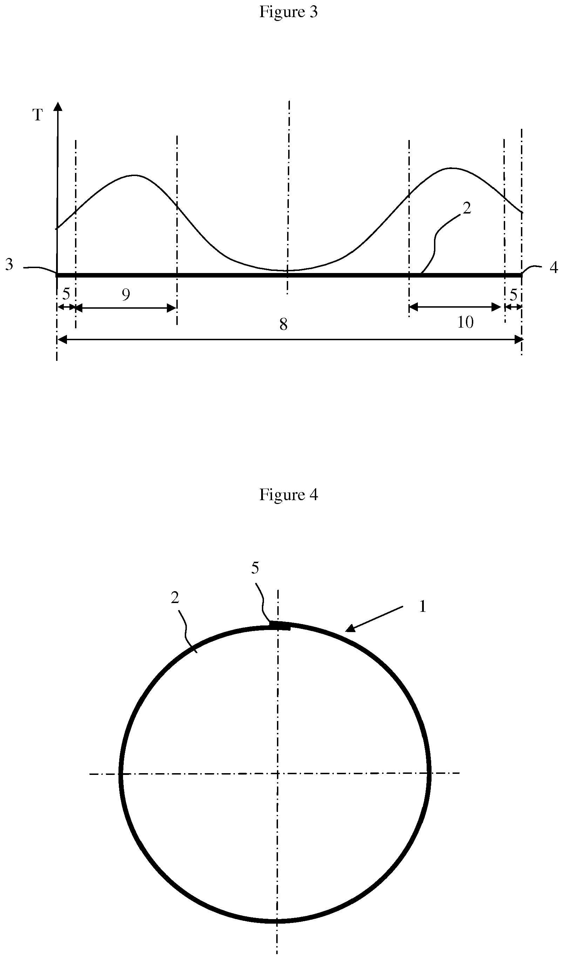

Avantageusement la bande est chauffée à une température constante dans la direction de défilement de la bande qui est aussi parallèle à l'axe du tube ; et avec un profil de température dans la direction perpendiculaire à la direction de défilement de la bande qui est aussi la direction circonférentielle du tube. Des exemples de profils de température dans la direction transverse sont illustrés figures 2 et 3. Les figures 2 et 3 montrent la section de la bande 2 perpendiculairement à la direction de défilement. Pour faciliter la représentation du profil de température, la bande est représentée à plat et non dans une géométrie tubulaire. Cette représentation de l'invention ne doit pas être considérée de façon restrictive. Le chauffage de la bande dans le procédé de soudage peut être réalisé lorsque la bande forme une surface plane, ou lorsque la bande forme un corps tubulaire, ou encore dans la partie intermédiaire de conformation.

La figure 2 illustre le profil de température de la bande 2 après soudage des extrémités 3 et 4 de la bande, le procédé de soudage consistant à la succession des opérations de chauffage, mise en pression et refroidissement de la zone 5. Parallèlement au soudage, des moyens sont mis en oeuvre pour chauffer la bande en dehors de la zone soudée 5. Le profil de température de la bande consécutivement à l'étape de soudage du corps tubulaire est représenté figure 2.

Grâce au chauffage de la bande en dehors de la zone soudée 5, des corps tubulaire de section parfaitement circulaire peuvent être obtenus. La figure 2, montre que les zones 9 et 10 connexes à la zone soudée 5 sont chauffées à une température proche de la température de la zone 5. Le chauffage des zones 9 et 10 évite un gradient de température trop brutal à proximité de la zone soudée. Les largeurs chauffées des zones 9 et 10 peuvent s'étendre respectivement jusqu'à environ ¼ de la largeur totale 8 de la bande. Dans certains cas il peut être avantageux de chauffer la bande sur toute sa largeur à une température homogène. Les zones 9 et 10 de la bande sont chauffées pour que leur température après soudage soit de préférence comprises entre 40 et 90°C. La température des zones 9 et 10 est ajustée en fonction des propriétés de la bande, de l'épaisseur de la bande, de la cadence de soudage.

La figure 3 illustre un deuxième exemple de profil de température de la bande 2 après soudage des extrémités 5. La figure 3 montre que a température des zones 9 et 10 est supérieure à celle de la zone soudée 5. Cette différence de température permet pour des bandes multicouches de corriger des défauts de circularités engendrés par le soudage des extrémités 3 et 4 de la bande.

La figure 4 illustre les corps tubulaires obtenus grâce au procédé décrit dans l'invention. En ajustant le profil de température, les défauts de circularités illustrés figure 1 sont supprimés. L'invention peut être utilisée pour la confection de corps tubulaires 1 réalisés par soudage des extrémités d'une bande 2 dont les extrémités forment un recouvrement 5 ou sont disposées bout à bout.

Selon un premier mode de réalisation de l'invention l'opération de chauffage de la bande est réalisée avant la mise en forme de la bande autour de la tige de soudage.

Selon un deuxième mode de réalisation, l'opération de chauffage de la bande est réalisée conjointement et non pas séquentiellement au soudage des extrémités de la bande.

Un troisième mode de réalisation consiste à chauffer la bande postérieurement à la découpe du corps tubulaire en sections de longueur identique et conjointement à l'opération de soudage de la tête du tube sur le corps tubulaire.

Une méthode préférentielle de chauffage du laminé consiste à utiliser de l'air chaud qui est soufflé sur la surface interne ou externe de la bande. Une température d'air comprise entre 150°C et 650°C est utilisée.

Un dispositif permettant d'ajuster le débit d'air, la température d'air, le profil de température et la longueur de chauffe est particulièrement intéressant. Ce dispositif est positionné avantageusement dans la zone précédant la mise en forme de la bande autour de la tige de soudage. Ce dispositif permet d'améliorer la rondeur des tubes dans une grande plage de diamètre, ladite plage étant généralement comprise entre 12,5mm et 75mm. Ce dispositif est aisément adaptable à la vitesse de production de la machine, en ajustant conjointement la température de l'air, le débit d'air ainsi que la longueur de chauffe. Grâce à ce dispositif, des tubes de grande rondeur ont pu être obtenus.

D'autre méthodes et dispositifs utilisant le chauffage par rayonnement, par conduction ou par induction peuvent être utilisés pour chauffer la bande.

L'invention peut être associée à d'autres dispositifs existant pour améliorer la rondeur des tubes par étirage de la zone soudée. L'invention est associée avantageusement au dispositif décrit dans la demande de brevet EP 07116384.4.

L'invention est particulièrement avantageuse car elle est intégrée dans le procédé de soudage contrairement à d'autres méthodes consistant à faire un post traitement du tube.

Après soudage, les parties chauffées peuvent être à une température supérieure ou égale à la température de la zone soudée.

## Revendications

1. Procédé de fabrication de corps tubulaires flexibles en matière plastique par soudage d'une bande comprenant les étapes suivantes :
- conformation d'une bande (1) autour d'une tige de soudage,
- mise en contact des extrémités (3,4) de la bande,
- formation d'une zone soudée (5) par chauffage, mise en pression et refroidissement desdites extrémités (3,4),
- chauffage de la bande (1), de préférence à une température supérieure à 60°C, en dehors de la zone soudée (5), préalablement, conjointement ou postérieurement à l'opération de soudage, au cours duquel la bande est chauffée à une température constante dans la direction de défilement de la bande, qui est aussi parallèle à l'axe du tube, et avec un profil de température dans la direction perpendiculaire à la direction de défilement de la bande, qui est aussi la direction circonférentielle du tube,
ledit procédé permettant de remédier aux défauts de circularité de corps tubulaires flexibles en matière plastique.

2. Procédé selon l'une des revendications précédentes dans lequel lesdites extrémités sont mises en contact bout-à-bout.

3. Procédé selon l'une des revendications 1 à 2 dans lequel lesdites extrémités sont mises en contact par recouvrement.

4. Procédé selon l'une des revendications précédentes dans lequel on chauffe la bande en dehors de la bande, sur toute sa largeur.

5. Procédé selon la revendication 4 dans lequel on chauffe la bande à une température constante sur toute sa largeur.

6. Procédé selon l'une des revendications 1 à 3 dans lequel on ne chauffe pas la bande sur toute sa largeur.

7. Procédé selon l'une des revendications précédentes dans lequel on chauffe la bande en dehors de la bande, en variant la température de chauffage le long de sa largeur.

8. Procédé selon la revendication 7 dans lequel on chauffe la bande à proximité de la zone soudée, à une température équivalente à la température de chauffage de la zone soudée.

9. Procédé selon la revendication 8 dans lequel le chauffage à proximité de la zone soudée est réalisé sur une longueur sensiblement égale à la moitié de la largeur de la bande.

10. Procédé selon la revendication 7 dans lequel on chauffe la bande à proximité de la zone soudée, à une température supérieure à la température de chauffage de la zone soudée.

11. Procédé selon l'une des revendications précédentes dans lequel on chauffe la bande en dehors de la zone soudée au moyen d'air chaud.

## Patentansprüche

1. Verfahren zur Herstellung von flexiblen röhrenförmigen Körpern aus Kunststoff durch Schweißen eines Bandes, umfassend die folgenden Schritte:
- Ausbildung eines Bandes (1) um einen Schweißstift,
- Inkontaktbringen der Enden (3, 4) des Bandes,
- Ausbildung einer Schweißzone (5) durch Erhitzen, Unterdrucksetzen und Abkühlen der Enden (3, 4),
- Erhitzen des Bandes (1) vorzugsweise auf eine Temperatur über 60 °C außerhalb der Schweißzone (5) vor, gemeinsam mit oder nach dem Schweißvorgang, während dessen das Band auf eine konstante Temperatur in Ablaufrichtung des Bandes, die auch parallel zur Achse der Röhre ist, erhitzt wird, und mit einem Temperaturprofil in die Richtung senkrecht auf die Ablaufrichtung des Bandes, die auch die Umfangsrichtung der Röhre ist,
wobei das Verfahren es ermöglicht, die Rundlauffehler von flexiblen röhrenförmigen Körpern aus Kunststoff zu beheben.

2. Verfahren nach einem der vorhergehenden Ansprüche, bei dem die Enden Stoß-an-Stoß in Kontakt gebracht werden.

3. Verfahren nach einem der Ansprüche 1 bis 2, bei dem die Enden durch Überlappung in Kontakt gebracht werden.

4. Verfahren nach einem der vorhergehenden Ansprüche, bei dem das Band außerhalb des Bandes auf seiner gesamten Breite erhitzt wird.

5. Verfahren nach Anspruch 4, bei dem das Band auf eine konstante Temperatur auf seiner gesamten Breite erhitzt wird.

6. Verfahren nach einem der Ansprüche 1 bis 3, bei dem das Band nicht auf seiner gesamten Breite erhitzt wird.

7. Verfahren nach einem der vorhergehenden Ansprüche, bei dem das Band außerhalb des Bandes erhitzt wird, wobei die Erhitzungstemperatur entlang seiner Breite variiert wird.

8. Verfahren nach Anspruch 7, bei dem das Band in der Nähe der Schweißzone auf eine Temperatur gleich der Erhitzungstemperatur der Schweißzone erhitzt wird.

9. Verfahren nach Anspruch 8, bei dem die Erhitzung in der Nähe der Schweißzone auf einer Länge im Wesentlichen gleich der Hälfte der Breite des Bandes erfolgt.

10. Verfahren nach Anspruch 7, bei dem das Band in der Nähe der Schweißzone auf eine Temperatur über der Erhitzungstemperatur der Schweißzone erhitzt wird.

11. Verfahren nach einem der vorhergehenden Ansprüche, bei dem das Band außerhalb der Schweißzone mit Hilfe von Heißluft erhitzt wird.

## Claims

1. Method for manufacturing flexible tubular bodies made of plastic by welding a strip, comprising the following steps:
- shaping a strip (1) around a welding rod,
- bringing the ends (3, 4) of the strip into contact,
- forming a welded zone (5) by heating, compressing and cooling the said ends (3, 4),
- heating the strip (1), preferably to a temperature of above 60°C, outside of the welded zone (5), prior to, simultaneously with or subsequent to the welding operation, during which heating the strip is heated to a temperature that is constant in the direction of travel of the strip, which is also parallel to the axis of the tube, and with a temperature profile in the direction perpendicular to the direction of travel of the strip, which is also the circumferential direction of the tube,
the said method making it possible to overcome roundness defects of the flexible tubular bodies made of plastic.

2. Method according to one of the preceding claims, in which the said ends are brought into contact by butting together.

3. Method according to one of Claims 1 to 2, in which the said ends are brought into contact with overlap.

4. Method according to one of the preceding claims, in which the strip is heated outside of the strip, across its entire width.

5. Method according to Claim 4, in which the strip is heated to a temperature that is constant across its entire width.

6. Method according to one of Claims 1 to 3, in which the strip is not heated across its entire width.

7. Method according to one of the preceding claims, in which the strip is heated outside of the strip, by varying the heating temperature along its width.

8. Method according to Claim 7, in which the strip is heated near to the welded zone, to a temperature equivalent to the temperature to which the welded zone is heated.

9. Method according to Claim 8, in which the heating near the welded zone is performed over a length substantially equal to half the width of the strip.

10. Method according to Claim 7, in which the strip is heated near the welded zone, to a temperature that is higher than the temperature to which the welded zone is heated.

11. Method according to one of the preceding claims, in which the strip is heated outside of the welded zone using hot air.
